# DEMANDE DE BREVET EUROPEEN

(11) **EP 1 094 577 A1**
(43) Date de publication de la demande: **25.04.2001**
(21) Numéro de dépôt: 00122702.4
(22) Date de dépôt: 18.10.2000
(51) Int. Cl.: H02G 3/02, B60R 16/02, H01B 7/00, H02G 3/04

(54) **Dispositif de maintien des branches d'un ensemble de fils électriques surmoulés**

(30) Priorité: 22.10.1999 FR 9913178
(71) Demandeur: SIEMENS AUTOMOTIVE S.A., 31036 Toulouse Cédex (FR); SAI Automotive Allibert Industrie, 92748 Nanterre (FR)
(72) Inventeur: Degardins, Pascal, 31000 Toulouse (FR); Bisognin, Julien, 60570 Andeville (FR)
(74) Mandataire: Zedlitz, Peter, Dipl.-Inf.

(57) **Abrégé**

Dispositif de maintien des branches d'un ensemble de fils électriques surmoulés formant un faisceau dont au moins un segment dit central est commun aux différents câbles et dont des segments terminaux sont indépendants, caractérisé en ce que au moins deux segments terminaux de câbles sont solidarisés par un lien sécable.

## Description

L'invention est du domaine du câblage électrique de véhicules. En particulier elle concerne le câblage de planche de bord ou de moteur automobile. Dans ce domaine, un faisceau de câbles, destiné par exemple à relier les éléments du tableau de bord aux organes moteurs, comprend couramment plusieurs dizaines de câbles (jusqu'à plusieurs centaines dans le cas de faisceau reliant tous les équipements, des optiques avant aux optiques arrières) attachés ensemble en leur partie centrale, puis orientés chacun selon les directions différentes à chaque extrémité en fonction de leur usage.

Il est clair qu'un tel faisceau de câbles, qui est un élément critique du véhicule, est rendu très onéreux du fait du besoin de protection mécanique, thermique, et d'étanchéité aux huiles et acides qui caractérisent l'environnement moteur. On utilise alors couramment des conditionnements par gaine fendue, par enrubannage, ou par joints unitaires de faisceau de câbles.

Lors de leur livraison avant installation dans le véhicule, les faisceaux, qui comprennent les câbles liés et éventuellement des connecteurs de terminaison desdits câbles, sont classiquement conditionnés dans des sacs plastiques permettant à la fois d'éviter que l'extrémité d'un câble de l'écheveau n'accroche un obstacle, et de faciliter leur maniement. Un tel faisceau, qui mesure sensiblement plus d'un mètre de long, pèse couramment plusieurs kilos, avec plusieurs dizaines de câbles sortant à chaque extrémité, et n'est donc pas d'un maniement facile.

Son conditionnement reste peu satisfaisant dans la pratique. Il multiplie par ailleurs les opérations nécessaires : enlèvement du conditionnement en sac plastique, placement du faisceau, gainage ou enrubannage pour chaque sous-faisceau.

La présente invention propose un nouveau mode de conditionnement des câbles dans un faisceau de câbles, présentant une grande simplicité et une économie en terme de coût de fabrication.

L'invention vise en premier lieu un dispositif de maintien de branches d'un ensemble de fils électriques surmoulés formant un faisceau dont au moins un segment dit central est commun aux différents câbles et dont des segments terminaux sont indépendants, caractérisé en ce que au moins deux segments terminaux de câbles sont solidarisés par un lien sécable.

On créé ainsi un dispositif de maintien des branches d'un toron par liens sécables injectés.

La description et les dessins qui suivent permettront de mieux comprendre les buts et avantages de l'invention, Il est clair que cette description n'est donnée qu'à titre d'exemple, et n'a pas de caractère limitatif.

Dans les dessins :
- la figure 1 représente un faisceau de câbles dans sa forme déployée;
- la figure 2 représente schématiquement une extrémité d'un faisceau de câbles, solidarisés par des liens sécables selon l'invention ;
- la figure 3 est une vue de détail d'un lien sécable ;
- la figure 4 est une variante de lien sécable ;
- la figure 5 illustre une variante de lien entre deux câbles ;
- la figure 6 est une vue en coupe du lien de la figure 5.

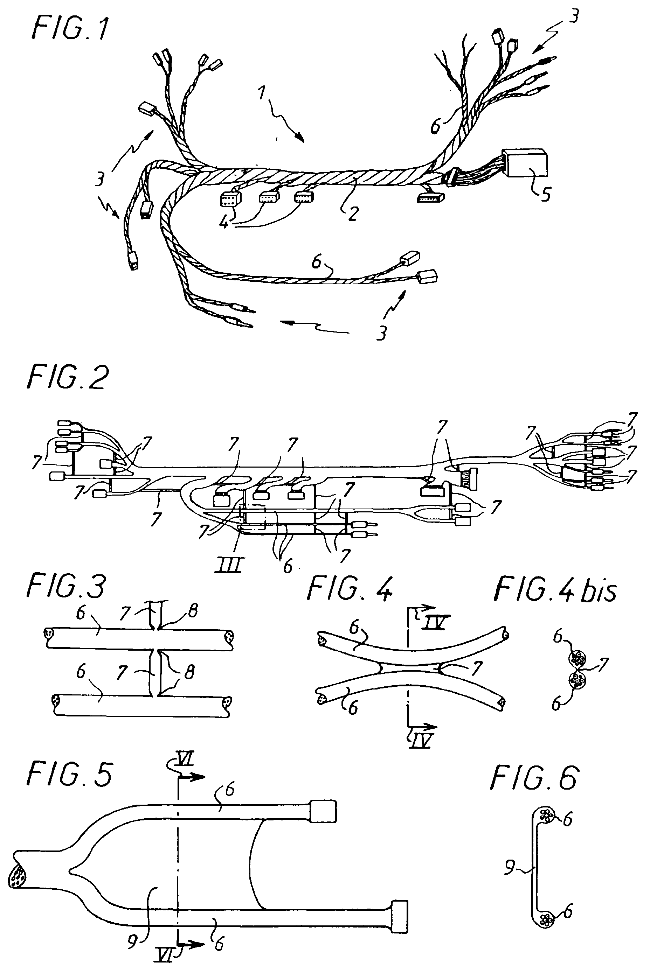

Comme on le voit sur la figure 1, un faisceau 1 de câble, par exemple pour tableau de bord d'automobile, comporte un tronc central 2, ainsi que une ou plusieurs arborescences 3 d'extrémité. Il peut comporter par ailleurs des connecteurs 4 disposés sur le tronc central 1, et un ou plusieurs connecteurs terminaux 5, selon la configuration spécifique du véhicule à équiper. On comprend que la forme déployée du faisceau 1 est tridimensionnelle, et dépend encore une fois de la géométrie du véhicule dans lequel le faisceau doit être installé. Comme on l'a dit, une fois installé en place, le faisceau doit être protégé des contraintes environnementales par un gainage ou autre protection connue de l'homme du métier.

Selon l'invention, un tel faisceau de câbles est surmoulé par un matériau plastique de protection (thermique, mécanique, aux acides ou huiles etc.), de type connu et non détaillé ici. Un tel surmoulage supprime la nécessité du gainage postérieur à l'installation.

Lors du surmoulage, réalisé de façon également connue, par exemple par injection de mousse polyuréthane dans un moule dans lequel les câbles destinés à former le faisceau sont préalablement disposés selon la configuration désirée, les extrémités ou branches libres 6 des câbles (qui sont également surmoulées) sont disposés côte à côte autant que possible de façon à former un seul ensemble sensiblement unidimensionnel (figure 2), et des câbles ainsi disposés à proximité sont liés par des ponts 7 de matière plastique formant ainsi lien sécable lors de l'installation.

Comme on le voit sur la figure 3, un tel pont 7 peut par exemple avoir une forme resserrée à au moins un des deux points 8 de jonction avec les câbles 6, de manière à créer un point de résistance mécanique réduite, propre à permettre une rupture préférentielle en ce point lors d'un effort manuel normal de traction exercé sur les câbles pour les séparer. Les dimensions des ponts 7 sont par exemple de l'ordre de quelques millimètres. Pour des branches de câbles de quelques dizaines de centimètres libres, des ponts 7 sont disposés à intervalles réguliers, et par exemple environ tous les vingt centimètres.

Dans une variante illustrée par la figure 4, chaque pont 7 est simplement réalisé par le rapprochement local de deux câbles, séparés par un sillon sécable sans surépaisseur gênante ni chute à éliminer après utilisation. Une telle disposition permet d'éviter de jeter une quantité de ponts 7 lors de la mise en place du faisceau, ces ponts 7 risquant de venir tomber dans le moteur ou le tableau de bord de façon gênante;

Dans une autre variante de mise en oeuvre, illustrée par les figures 5 et 6, on tire avantage du surmoulage des câbles pour créer une épaisseur mince 9 formant voile (moins d'un demi millimètre par exemple). Un tel voile 9 est adapté à recevoir soit un marquage de type écriture pour faciliter le positionnement du faisceau ou identifier celui-ci, soit un code barre d'identification. Dans une variante similaire, ce voile est de forme adapté à former une protection locale d'une pièce disposée en dessous après installation du faisceau.

On comprend par ailleurs qu'il est très aisé de colorer la matière utilisé pour le surmoulage du faisceau de câbles, ce qui permet de distinguer des faisceaux destinés à des modèles différents (qui sont le plus souvent montés sur une même chaîne de montage), par exemple en colorant différemment les faisceaux destinés aux véhicules diesels et aux véhicules essence d'un même modèle (ces faisceaux étant généralement livrés en caisses).

Dans une variante de matériau de surmoulage, on utilise du polypropylène au lieu de mousse de polyuréthane.

Un avantage clair de l'invention est que le surmoulage sert, d'une part, de matériau de protection des câbles et est pré-installé sur ceux ci, et, d'autre part, fait fonction de conditionnement en vue de la livraison. On supprime ainsi le besoin de sac plastique de transport, ainsi que les problèmes d'emmêlage des faisceaux, d'enrubannage etc.

La portée de la présente invention ne se limite pas aux détails des formes de réalisation ci-dessus considérées à titre d'exemple, mais s'étend au contraire aux modifications à la portée de l'homme de l'art.

## Revendications

1. Dispositif de maintien de branches d'un ensemble de fils électriques surmoulés formant un faisceau (1) dont au moins un segment dit central (2) est commun aux différents câbles et dont des segments terminaux (3) sont indépendants, caractérisé en ce que au moins deux segments terminaux de câbles sont solidarisés par au moins un lien sécable (7).

2. Dispositif selon la revendication 1, caractérisé en ce que tous les segments terminaux (3) situés à une même extrémité du segment central (2) sont solidarisés par des liens sécables (7).

3. Dispositif selon l'une quelconque des revendications 1 à 2, caractérisé en ce que au moins deux segments terminaux (3) de câbles sont reliés par des liens sécables (7) disposés à intervalle longitudinal régulier.

4. Dispositif selon l'une quelconque des revendications 1 à 3, caractérisé en ce que au moins un lien sécable (7) a une forme resserrée à au moins un des deux points (8) de jonction avec les câbles (6), de manière à créer un point de résistance mécanique réduite, propre à permettre une rupture préférentielle en ce point lors d'un effort manuel normal de traction exercé sur les câbles pour les séparer.

5. Dispositif selon l'une quelconque des revendications 1 à 3, caractérisé en ce que au moins un lien sécable (7) est réalisé par le rapprochement local de deux câbles, séparés par un sillon sécable.

6. Dispositif selon l'une quelconque des revendications 1 à 5, caractérisé en ce que au moins un lien (7) entre deux câbles (6) consiste en une surface d'épaisseur mince (9).

7. Dispositif selon l'une quelconque des revendications 1 à 6, caractérisé en ce que les liens sécables (7) sont réalisés en polyuréthane.

8. Ensemble de fils électriques surmoulés formant un faisceau (1) dont au moins un segment dit central (2) est commun aux différents câbles et dont des segments terminaux (3) sont indépendants, caractérisé en ce qu'il comporte au moins un dispositif de maintien de branches selon l'une des revendications 1 à 7.
